# EUROPÄISCHE PATENTSCHRIFT

(11) **EP 0 330 907 B1**
(45) Veröffentlichungstag und Bekanntmachung des Hinweises auf die Patenterteilung: **21.04.1993**
(21) Anmeldenummer: 89102552.0
(22) Anmeldetag: 15.02.1989
(51) Int. Cl.: A23G 3/02, A23G 3/04, A23G 3/32

(54) **Verfahren und Vorrichtung zum Herstellen von Samenfrüchte-Krokant**
Process and apparatus for producing crispy seed fruits
Procédé et appareil pour la fabrication de croquant aux amandes

(30) Priorität: 01.03.1988 DE 3806471
(43) Veröffentlichungstag der Anmeldung: 06.09.1989
(73) Patentinhaber: Jacobs Suchard AG, CH-8008 Zürich (CH)
(72) Erfinder: Stadler, Edwin, Dr., A-5081 Anif (AT); Hergesell, Wolfgang, D-8246 Markt Schellenberg (DE); Pidner, Ernst, A-5102 Anthering (AT)
(74) Vertreter: Bolte, Erich, Dipl.-Ing.

(56) Entgegenhaltungen:
- EP-A- 0 175 160
- EP-A- 0 247 926
- FR-A- 1 367 452
- FR-A- 2 109 086
- US-A- 3 543 696
- US-A- 3 584 585
- US-A- 4 054 271
- US-A- 4 098 914

## Beschreibung

Die Erfindung betrifft ein Verfahren zum Herstellen von Samenfrüchte-Krokant aus einer Mischung aus Samenfruchtkernen und Zucker in einem kontinuierlich fördernden Schneckenextruder. Weiterhin betrifft die Erfindung eine Vorrichtung zur Durchführung des Verfahrens.

Der Geschmack von Samenfrüchte-Krokant ist wesentlich bestimmt durch den Verlauf des Schmelzvorgangs zur Umwandlung von Zucker in karamelisierten Zucker. Wird der Zucker zu lange der Temperaturbeanspruchung ausgesetzt oder ist die Temperatur zu hoch, kommt es zumindest partiell zu Überhitzungen und damit zur Bildung von Bitterstoffen im Produkt.

Aus der US-A-3 584 585 ist ein Verfahren zum Herstellen von Krokantmischungen bekannt, bei dem am Anfang der Förderstrecke durch eine Einlaßöffnung Nüsse in einen Schneckenextruder eingefüllt werden. Im weiteren Verlauf der Förderstrecke wird durch eine weitere Einlaßöffnung Zucker in den Schneckenextruder gegeben. Dabei befindet sich der Zucker vor Eintritt in den Schneckenextruder bereits in einem heißen, geschmolzenen Zustand. Anschließend erfolgt eine Vermischung des geschmolzenen Zuckers mit den Nüssen. Eine Karamelisierung des Zuckers wird in dieser Schrift nicht angesprochen.

Der Erfindung liegt die Aufgabe zugrunde, Verfahren und Vorrichtung zum Herstellen von Samenfrüchte-Krokant anzubieten, bei denen dieser mit einem homogenen, konstanten Karamelisierungsgrad hergestellt werden kann.

Zur Lösung dieser Aufgabe ist das erfindungsgemäße Verfahren dadurch gekennzeichnet, daß der Zucker in einer ersten Einzugszone (Zuckereinzugszone) in den Schneckenextruder eingegeben wird, entlang eines ersten Teils einer Förderstrecke des Schneckenextruders einen Karamelisierungsbereich durchläuft, daß in einer zweiten Einzugszone (Sameneinzugszone) die Samenfruchtkerne hinzugefügt und daß diese in einem zweiten Teil der Förderstrecke beim Vermischen mit dem karamelisierten Zucker geröstet werden.

Die mit der Erfindung erzielten Vorteile bestehen insbesondere darin, daß das Verfahren zum Herstellen von Samenfrüchte-Krokant in einem Schneckenextruder kontinuierlich und ohne Unterbrechung abläuft. Der am Anfang der Förderstrecke in den Schneckenextruder gegebene Zucker wird zuerst karamelisiert. Nach Zugabe von Samenfruchtkernen werden diese zusammen mit dem karamelisierten Zucker vermischt, wobei gleichzeitig die Samenfruchtkerne geröstet werden. Damit wird durch das erfindungsgemäße Verfahren erreicht, daß die Ausgangsbestandteile des Krokants, nämlich Zucker und Samenfrüchte, unbehandelt in den Schneckenextruder eingegeben werden können. Eine Vorbehandlung der Ausgangsbestandteile, insbesondere des Zuckers, außerhalb des Schneckenextruders ist nicht mehr erforderlich.

In Ausgestaltung des erfindungsgemäßen Verfahrens wird erreicht, Puderzucker zu karamelisieren, der bei ungleichmäßiger Erwärmung zu Agglomeration neigt und somit bei den bisherigen Verfahren bei der Herstellung nicht verwendet werden konnte. Puderzucker bietet gegenüber Kristallzucker den Vorteil, daß aufgrund seines geringeren Partikeldurchmessers ein schnelleres Erschmelzen erzielt wird. Außerdem ist durch die Verwendung von Puderzucker bei lediglichem Einschmelzen der Zuckeroberfläche eine größere Oberfläche für die Bindung der beim Röstprozeß freiwerdenden Samenfruchtaromen vorhanden.

Nach einer Weiterbildung des erfindungsgemäßen Verfahrens durchläuft die Mischung mehrere, vorzugsweise sieben Zonen, die von einzelnen Heizelementen unterschiedlich temperiert sind. Dabei weisen die Zuckereinzugszone und die Sameneinzugszone eine Temperatur von 160° C bzw. 150° C auf. Außerdem werden die Samenfruchtkerne bereits außerhalb des Extruders auf eine Temperatur von 50° C vorgewärmt.

Zwischen Zuckereinzugszone und Sameneinzugszone sind vorzugsweise drei einen Karamelisierungsbereich bildende Karamelisierungszonen vorgesehen, in denen die Karamelisierung des Zuckers erfolgt. Hierzu weisen die drei Karamelisierungszonen in Förderrichtung abfallende Temperaturen auf, insbesondere 220° C in der ersten, 190° C in der zweiten und 160° C in der dritten Karamelisierungszone.

Nachfolgend der Sameneinzugszone werden in mindestens einer, vorzugsweise zwei einen Mischungsbereich bildenden Mischzonen karamelisierter Zucker und Samenfruchtkerne miteinander vermischt. Hierbei findet gleichzeitig eine Röstung der Samenfruchtkerne statt. Die Temperaturen der Mischzonen sind ebenfalls in Förderrichtung abfallend und betragen in der ersten Mischzone 130° C und in der zweiten Mischzone 120° C.

Die Schnecke des Schneckenextruders ist zumindest teilweise beheizt, und zwar mit einer Temperatur von 140° C.

Zur Erzielung einer größeren Aromadichte können die Samenfruchtkerne vor dem Einfüllen in den Schneckenextruder zerkleinert werden.

Die Vorrichtung zur Durchführung des Verfahrens besteht aus der in mehrere, vorzugsweise sieben Förderabschnitte (Zonen) unterteilten Förderstrecke eines Schneckenextruders, wobei jede Zone mit einem unabhängig arbeitenden Heizelement versehen ist. Der Zylinder des Schneckenextruders ist im Bereich von Zuckereinzugszone und Sameneinzugszone mit verschließbaren Einfüllöffnungen versehen.

Um die Förderbedingungen dem Verfahrensablauf anzupassen, weist die Schnecke in den verschiedenen Bereichen der Förderstrecke unterschiedliche Geometrien auf.

Zur gezielten Zuführung von Zucker und/oder Samenfruchtkernen ist jeder Einzugszone eine Dosiereinrichtung oder eine Misch-Dosier-Einrichtung zugeordnet.

Alternativ kann der Schneckenextruder auch mit zwei Schnecken ausgerüstet sein, die gegenläufig oder gleichläufig antreibbar sind mit ineinandergreifenden oder aneinander angrenzenden Profilen.

Einzelheiten des erfindungsgemäßen Verfahrens sowie der Vorrichtung werden nachfolgend anhand eines in der Zeichnung dargestellten Ausführungsbeispiels näher erläutert. Es zeigt:
- Fig. 1: einen Doppelschneckenextruder mit Dosiereinrichtungen im Längsschnitt,
- Fig. 2: eine Seitenansicht des Doppelschneckenextruders gemäß Fig. 1.

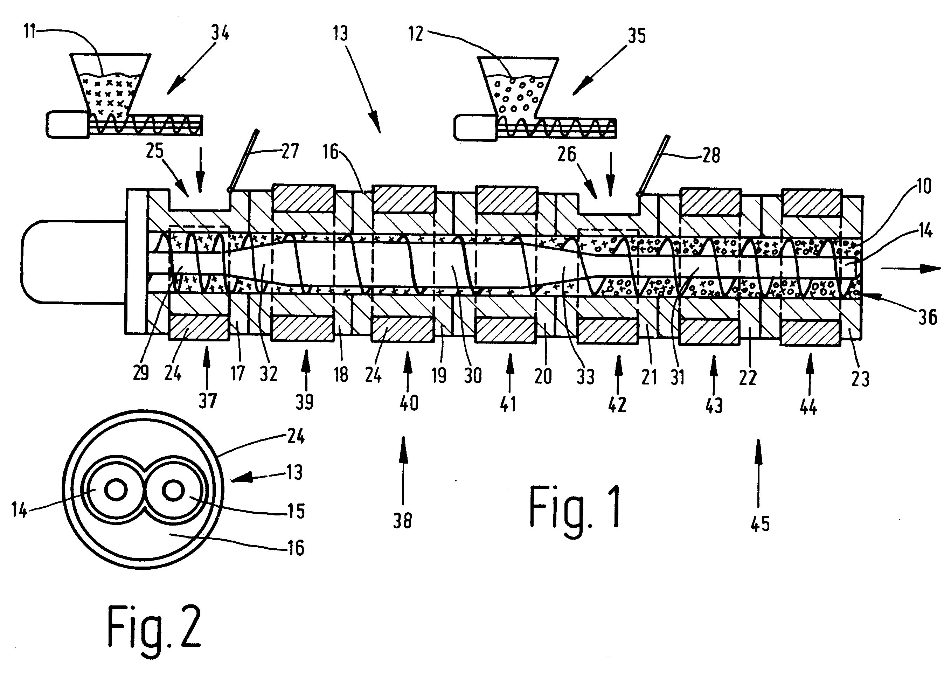

Anhand des in den Fig. 1 und 2 dargestellten Doppelschnekkenextruders sollen die einzelnen, zum Herstellen von Samenfrüchte-Krokant notwendigen Verfahrensschritte näher erläutert werden. Beispielhaft wird hier das Verfahren zum Herstellen von rieselfähigem Haselnuß-Krokant für die Nougatmassen-Herstellung beschrieben. Ziel des Verfahrens ist es, einen Haselnuß-Krokant herzustellen, der entgegen dem nach den herkömmlichen Verfahren hergestellten Krokant direkt weiterverarbeitet werden kann, ohne daß vor der Weiterverarbeitung diverse Zerkleinerungsaggregate zum Herstellen eines rieselfähigen Krokants durchlaufen werden müssen.

Die Bestandteile einer Mischung 10 zum Herstellen von rieselfähigem Haselnuß-Krokant sind Puderzucker 11 und fein zerkleinerte Haselnüsse 12. Durchgeführt wird das Verfahren in einem Doppelschneckenextruder 13 mit gegenläufigen Schnecken 14 und 15, die in einem gemeinsamen Zylinder 16 untergebracht sind.

Der Zylinder 16 ist in sieben Zylinderabschnitte 17, 18, 19, 20, 21, 22 und 23 unterteilt; diese können als einzelne Teilzylinder ausgebildet sein, die zusammengesetzt den Zylinder 16 ergeben, oder lediglich Bereiche des einstükkigen Zylinders 16 bezeichnen. Die Zylinderabschnitte 17..23 sind mit Heizelementen 24 versehen, die eine unabhängige Temperaturregelung der einzelnen Zylinderabschnitte 17..23 und somit die Einstellung bestimmter Temperaturprofile in Förderrichtung erlauben.

Die Zylinderabschnitte 17 und 21 weisen Einfüllöffnungen 25 und 26 auf, die mit Deckeln 27 und 28 verschließbar sind.

Die Schnecken 14 und 15 des Doppelschneckenextruders 13 weisen im Bereich bestimmter Zylinderabschnitte 17..23 unterschiedliche Geometrien auf. Im Bereich des Zylinderabschnitts 17 haben die Schnecken 14 und 15 in ihrem Anfangsabschnitt 29 einen geringen Kernquerschnitt und eine große Gangzahl. Demgegenüber weisen sie im Bereich der Zylinderabschnitte 18, 19, 20, in ihrem Mittelabschnitt 30, einen großen Kernquerschnitt sowie eine kleine Gangzahl auf. In ihrem Endabschnitt 31, im Bereich der Zylinderabschnitte 21, 22 und 23, schließlich sind sie durch einen geringen Kernquerschnitt und eine, relativ gemessen an den Gangzahlen im Anfangsabschnitt 29 und im Mittelabschnitt 30, mittlere Gangzahl gekennzeichnet. In Übergangsbereichen 32 bzw. 33 vom Anfangsabschnitt 29 zum Mittelabschnitt 30 bzw. vom Mittelabschnitt 30 zum Endabschnitt 31 hin erfolgt ein jeweils stetiger Übergang der Kernquerschnitte sowie der Gangzahlen.

Oberhalb der Einfüllöffnungen 25 und 26 im Zylinder 16 des Doppelschneckenextruders 13 ist jeweils eine Dosiereinrichtung 34 bzw. 35 angeordnet.

Bei diesem Verfahren zum Herstellen von Haselnuß-Krokant wird die Mischung 10 bzw. der Puderzucker 11 kontinuierlich längs einer aus dem Zylinder 16 und den Schnecken 14, 15 des Doppelschneckenextruders 13 gebildeten Förderstrecke 36 gefördert. Die Förderstrecke 36 ist entsprechend den verschiedenen unterschiedlich ablaufenden Verfahrensschritten in bestimmte Zonen bzw. Bereiche unterteilt.

In einer Zuckereinzugszone 37 der Förderstrecke 36 im Bereich des Zylinderabschnitts 17 wird der Puderzucker 11 mittels der Dosiereinrichtung 34 mit konstanter Menge pro Zeiteinheit durch die Einfüllöffnung 25 in den Doppelschneckenxtruder 13 gegeben. Um Verstopfungen in der Zuckereinzugszone 37 zu vermeiden, muß die Temperatur des Zylinderabschnitts 17 unterhalb des Schmelzpunktes des Puderzuckers 11 liegen; sie beträgt ca. 160° C. Die Geometrie der Schnecken 14, 15 im Bereich der Zuckereinzugszone 37 ist so gewählt, daß der Puderzucker 11 in den Zylinder 16 gefördert wird, ohne daß ein Rückfluß möglich ist.

Nachfolgend der Zuckereinzugszone 37 schließt sich ein Karamelisierungsbereich 38 an, gebildet aus drei Karamelisierungszonen 39, 40 und 41 im Bereich der Zylinderabschnitte 18, 19 und 20, in dem der Puderzucker 11 karamelisiert wird. Die Temperaturen in den betreffenden Zylinderabschnitten 18, 19 und 20 sowie die Geometrien der Schnecken 14, 15 im Karamelisierungsbereich 38 sind so gewählt, daß sich eine möglichst homogene Temperatur in der Schmelze und damit ein gleichmäßiger Karamelisierungsgrad des Puderzuckers 11 ergibt. Zur Herstellung von Haselnuß-Krokant wird im Karamelisierungsbereich 38 ein Temperaturprofil eingestellt, das gekennzeichnet ist durch die folgenden in Förderrichtung abfallenden Temperaturen der Zylinderabschnitte 18, 19 und 20: ca. 220° C im Zylinderabschnitt 18, ca. 190° C im Zylinderabschnitt 19 und ca. 160° C im Zylinderabschnitt 20. Eine Senkung bzw. Anhebung des Temperaturniveaus führt zu einer unzureichenden Karamelisierung des Puderzuckers 11 bzw. zu einer Erhöhung des Karamelisierungsgrades, wobei ein zu hoher Karamelisierungsgrad zur Bildung von Bitterstoffen und damit zu einem Bittergeschmack des Produkts führt. Voraussetzung für die gleichmäßige Karamelisierung des Puderzuckers 11 ist neben der genauen Einstellung des Temperaturprofils ein möglichst geringer radialer Temperaturgradient im karamelisierten Puderzucker 11. Dementsprechend ist die Geometrie der Schnecken 14, 15 im Karamelisierungsbereich 38 so gewählt, daß sich für den karamelisierten Puderzucker 11 ein großes Oberflächen-Volumen-Verhältnis ergibt.

Dem Karamelisierungsbereich 38 folgt im Bereich des Zylinderabschnitts 21 eine Sameneinzugszone 42, in der mittels der Dosiereinrichtung 35 durch die Einfüllöffnung 25 dem Doppelschneckenextruder 13 fein zerkleinerte Haselnüsse 12 zugeführt werden. In der Sameneinzugszone 42 ist im Zylinderabschnitt 21 die Temperatur auf 150° C abgesenkt, um ein Nachbräunen des zuvor karamelisierten Puderzuckers 11 auszuschließen. Die fein zerkleinerten Haselnüsse 12 selbst sind auf 50° C vorgewärmt, um ein zu starkes Abkühlen der in der Sameneinzugszone 42 aus karamelisiertem Puderzucker 11 und Haselnüssen 12 gebildeten Mischung 10 zu verhindern. In der Sameneinzugszone 42 ist der Kernquerschnitt der Schecken 14, 15 wieder erheblich reduziert, um das durch Zuführung der Haselnüsse 12 vergrößerte Gesamtvolumen aufnehmen zu können.

Der letzte Verfahrensschritt bei der Herstellung von Haselnuß-Krokant ist gekennzeichnet durch eine gleichmäßige Durchmischung der Mischung 10 bei gleichzeitiger Röstung der fein zerkleinerten Haselnüsse 12 in einem im Bereich der Zylinderabschnitte 22 und 23 aus zwei Mischzonen 43, 44 gebildeten Mischungsbereich 45. Die Temperaturen in den zugehörigen Zylinderabschnitten 22 und 23 betragen ca. 130° C bzw. ca. 120° C und sind so gewählt, daß sie zum einen ausreichend hoch für das Rösten der Haselnüsse 12 sind, und zum anderen die Temperatur beim Austrag der Mischung 10 am Ende der Förderstrecke 36 trotz Beheizung der Schnecken 14, 15 auf ca. 140° C maximal 110° C beträgt. Hierdurch soll sichergestellt werden, daß kein unkontrolliertes Nachrösten der Haselnüsse 12 eintritt.

Die angegebenen Temperaturen in den einzelnen Zylinderabschnitten 17..23 bei der Herstellung von rieselfähigem Haselnuß-Krokant gelten nur bei folgender Bemessung der übrigen Herstellungsparameter:
- Dosierung von Staubzucker 11 und fein zerkleinerten Haselnüssen 12: 80 kg/h
- Temperatur der Schnecken 14, 15: 140° C
- Drehzahl der Schnecken 14, 15: 50 U/min
- wirksame Länge der Schecken 14, 15: 140 cm
- Verweilzeit des Puderzuckers 11 im Doppelschneckenextruder 13: ca. 2 Min.

Bei Einhaltung der o.a. Temperaturen für die einzelnen Zylinderabschnitte 17..23 ist gewährleistet, daß der aus feinen Partikeln bestehende Puderzucker 11 nur jeweils an den Oberflächen dieser Partikel anschmilzt und daher ein rieselfähiger, qualitativ hochwertiger, weil sehr heller Haselnuß-Krokant das Ergebnis des Herstellungsverfahrens ist.

Natürlich ist es auch möglich, neben den Heizelementen 24 zusätzliche Kühlelemente am Doppelschneckenextruder 13 oder anderen Extruderbauformen vorzusehen, um ggf. eine schnellere Regelung oder größere Temperatursprünge entlang der Förderstrecke 36 zu ermöglichen.

### Bezugszeichenliste:

- 10: Mischung
- 11: Puderzucker
- 12: Haselnüsse
- 13: Doppelschneckenextruder
- 14: Schnecke
- 15: Schnecke
- 16: Zylinder
- 17: Zylinderabschnitt
- 18: Zylinderabschnitt
- 19: Zylinderabschnitt
- 20: Zylinderabschnitt
- 21: Zylinderabschnitt
- 22: Zylinderabschnitt
- 23: Zylinderabschnitt
- 24: Heizelement
- 25: Einfüllöffnung
- 26: Einfüllöffnung
- 27: Deckel
- 28: Deckel
- 29: Anfangsabschnitt
- 30: Mittelabschnitt
- 31: Endabschnitt
- 32: Übergangsbereich
- 33: Übergangsbereich
- 34: Dosiereinrichtung
- 35: Dosiereinrichtung
- 36: Förderstrecke
- 37: Zuckereinzugszone
- 38: Karamelisierungsbereich
- 39: Karamelisierungszone
- 40: Karamelisierungszone
- 41: Karamelisierungszone
- 42: Sameneinzugszone
- 43: Mischzone
- 44: Mischzone
- 45: Mischungsbereich

## Patentansprüche

1. Verfahren zum Herstellen von Samenfrüchte-Krokant aus einer Mischung aus Samenfruchtkernen und Zucker in einem kontinuierlich fördernden Schneckenextruder, **dadurch gekennzeichnet,** daß der Zucker in einer ersten Einzugszone (Zuckereinzugszone 37) in den Schneckenextruder eingegeben wird, entlang eines ersten Teils einer Förderstrecke (36) des Schneckenextruders einen Karamelisierungsbereich (38) durchläuft, daß in einer zweiten Einzugszone (Sameneinzugszone 42) die Samenfruchtkerne hinzugefügt und daß diese in einem zweiten Teil der Förderstrecke (36) beim Vermischen mit dem karamelisierten Zucker geröstet werden.

2. Verfahren nach Anspruch 1, gekennzeichnet durch die Verwendung von Puderzucker (11) und/oder Zuckeralkohol als Bestandteil der Mischung (10).

3. Verfahren nach Anspruch 1, dadurch gekennzeichnet, daß die entlang einer Förderstrecke (36) des Schneckenextruders bewegte Mischung (10) mehrere, vorzugsweise sieben Förderabschnitte (Zonen 37, 39, 40, 41, 42, 43, 44) durchläuft, die unterschiedlich temperiert sind.

4. Verfahren nach Anspruch 1, dadurch gekennzeichnet, daß die Zuckereinzugszone (37) eine Temperatur von 160° C und die Sameneinzugszone (42) eine Temperatur von 150° C aufweisen.

5. Verfahren nach Anspruch 1, dadurch gekennzeichnet, daß die Samenfruchtkerne (Haselnüsse 12) außerhalb des Extruders vorgewärmt werden, vorzugsweise auf eine Temperatur von 50° C, und so in die Sameneinzugszone (42) eingeführt werden.

6. Verfahren nach Anspruch 3, dadurch gekennzeichnet, daß zwischen Zuckereinzugszone (37) und Sameneinzugszone (42) in einem durch vorzugsweise drei Zonen (Karamelisierungszonen 39, 40, 41) gebildeten Karamelisierungsbereich (38) die Karamelisierung des Zuckers (Puderzucker 11) erfolgt, insbesondere unter Einschmelzung lediglich der Zuckerkornoberfläche.

7. Verfahren nach Anspruch 6, dadurch gekennzeichnet, daß die Karamelisierungszonen (39, 40, 41) in Förderrichtung abfallende Temperaturen aufweisen, insbesondere 220° C in der ersten Karamelisierungszone (39), 190° C in der zweiten Karamelisierungszone (40) und 160° C in der dritten Karamelisierungszone (41).

8. Verfahren nach Anspruch 3, dadurch gekennzeichnet, daß im Anschluß an die Sameneinzugszone (42) zur Bildung einer rieselfähigen Krokantmischung in mindestens einer, vorzugsweise in zwei einen Mischungsbereich (45) bildenden Zonen (Mischzonen 43, 44) eine Durchmischung von karamelisiertem Zucker (Puderzucker 11) und Samenfruchtkernen (Haselnüssen 12) stattfindet.

9. Verfahren nach Anspruch 8, dadurch gekennzeichnet, daß die Mischzonen (43, 44) in Förderrichtung abfallende Temperaturen aufweisen, insbesondere 130° C in der ersten Mischzone (43) und 120° C in der zweiten Mischzone (44).

10. Verfahren nach einem der Ansprüche 1 bis 9, dadurch gekennzeichnet, daß die Schnecke (14 bzw. 15) des Schneckenextruders zumindest teilweise beheizt ist, insbesondere auf eine Temperatur von 140° C.

11. Verfahren nach einem der Ansprüche 1 bis 10, dadurch gekennzeichnet, daß die Samenfruchtkerne (Haselnüsse 12) vor dem Einfüllen in den Schneckenextruder zerkleinert werden zur Erzielung einer größeren Aromadichte des Samenfrüchte-Krokants.

12. Vorrichtung zur Durchführung des Verfahrens nach einem der Ansprüche 1 bis 11, dadurch gekennzeichnet, daß ein aus Zylinder (16) und mindestens einer Schnecke (14 bzw. 15) bestehender Schneckenextruder eine in mehrere Zonen (37, 39, 40, 41, 42, 43, 44) unterteilte Förderstrecke (36) und eine jeder Zone (37, 39, 40, 41, 42, 43, 44) zugeordnete, gesondert einstellbare Temperiereinrichtung (Heizelemente 24) aufweist, wobei der ersten Zone (Zuckereinzugszone 37) eine Einfüllöffnung (25) für Zucker zugeordnet ist, anschließend in Förderrichtung mehrere, vorzugsweise drei Karamelisierungszonen (39, 40, 41) zur Karamelisierung des Zuckers angeordnet sind, der nachfolgenden Zone (Sameneinzugszone 42) eine weitere Einfüllöffnung (26) für Samenfruchtkerne zugeordnet ist und danach mehrere, vorzugsweise zwei Mischzonen (43, 44) angeordnet sind zur Durchmischung der Samenfruchtkerne mit dem Zucker.

13. Vorrichtung nach Anspruch 12, dadurch gekennzeichnet, daß die Schnecke (14 bzw. 15) im zum Karamelisierungsbereich (38) korrespondierenden Mittelabschnitt (30) einen größeren Kernquerschnitt und eine geringere Gangzahl aufweist als im zur Zuckereinzugszone (37) korrespondierenden Anfangsabschnitt (29).

14. Vorrichtung nach Anspruch 12 oder 13, dadurch gekennzeichnet, daß die Schnecke (14 bzw. 15) im zur Sameneinzugszone (42) und zum Mischungsbereich (45) korrespondierenden Endabschnitt (31) einen geringeren Kernquerschnitt als im Mittelabschnitt (30) und eine geringere Gangzahl als im Anfangsabschnitt (29) sowie eine größere Gangzahl als im Mittelabschnitt (30) aufweist.

15. Vorrichtung nach einem der Ansprüche 12 bis 14, dadurch gekennzeichnet, daß die Schnecke (14 bzw. 15) im zur Zuckereinzugszone (37) korrespondierenden Anfangsabschnitt (29) einen geringeren Kernquerschnitt und eine größere Gangzahl als im Mittelabschnitt (30) aufweist.

16. Vorrichtung nach einem der Ansprüche 12 bis 15, dadurch gekennzeichnet, daß Zuckereinzugszone (37) und Sameneinzugszone (42) eine Dosiereinrichtung (34, 35) oder eine Misch-Dosier- Einrichtung zugeordnet ist zur dosierten Zuführung von Zucker (Puderzucker 11) und/oder Samenfruchtkernen (Haselnüsse 12).

17. Vorrichtung nach einem der Ansprüche 12 bis 16, dadurch gekennzeichnet, daß mehrere, insbesondere zwei Schnecken (14, 15) in dem Zylinder (16) des Schneckenextruders angeordnet sind, die gegenläufig oder gleichläufig antreibbar sind mit ineinandergreifenden oder aneinander angrenzenden Profilen.

## Claims

1. Process for producing fruit kernel caramel from a mixture of fruit kernels and sugar in a continuously conveying screw extruder, characterised in that the sugar is fed in a first intake zone (sugar intake zone 37) to the screw extruder, passes through a caramelisation region (38) along a first part of a conveying path (36) of the screw extruder, that the fruit kernels are added in a second intake zone (fruit intake zone 42) and that these are roasted in a second part of the conveying path (36) while being mixed with the caramelised sugar.

2. Process according to Claim 1, characterised by the use of icing sugar (11) and/or a sugar alcohol as a constituent of the mixture (10).

3. Process according to Claim 1, characterised in that the mixture (10), moved along a conveying path (36) of the screw extruder, runs through a plurality of conveying sections, preferably seven conveying sections (zones 37, 39, 40, 41, 42, 43 and 44), which are at different temperatures.

4. Process according to Claim 1, characterised in that the sugar intake zone (37) is at a temperature of 160°C and the fruit intake zone (42) is at a temperature of 150°C.

5. Process according to Claim 1, characterised in that the fruit kernels (hazelnuts 12) are preheated outside the extruder, preferably to a temperature of 50°C, and are fed in this state to the fruit intake zone (42).

6. Process according to Claim 3, characterised in that the caramelisation of the sugar (icing sugar 11) takes place, especially with melting of only the surface of the sugar grains, between the sugar intake zone (37) and the fruit intake zone (42) in a caramelisation region (38) formed by preferably three zones (caramelisation zones 39, 40, 41).

7. Process according to Claim 6, characterised in that the caramelisation zones (39, 40, 41) are at temperatures which decrease in the direction of conveyance, in particular 220°C in the first caramelisation zone (39) 190°C in the second caramelisation zone (40) and 160°C in the third caramelisation zone (41).

8. Process according to Claim 3, characterised in that, downstream of the fruit intake zone (42), in order to form a flowable caramel mixture, thorough mixing of caramelised sugar (icing sugar 11) and fruit kernels (hazelnuts 12) takes place in at least one zone, preferably in two zones (mixing zones 43, 44) forming a mixing region (45).

9. Process according to Claim 8, characterised in that the mixing zones (43, 44) are at temperatures which decrease in the direction of conveyance, in particular 130°C in the first mixing zone (43) and 120°C in the second mixing zone (44).

10. Process according to one of Claims 1 to 9, characterised in that the screw (14 or 15) of the screw extruder is at least partially heated, in particular to a temperature of 140°C.

11. Process according to one of Claims 1 to 10, characterised in that the fruit kernels (hazelnuts 12) are comminuted before they are filled into the screw extruder, in order to obtain a greater aroma density of the fruit kernel caramel.

12. Equipment for carrying out the process according to one of Claims 1 to 11, characterised in that a screw extruder, consisting of a barrel (16) and at least one screw (14 and/or 15), exhibits a conveying path (36) which is subdivided into a plurality of zones (37, 39, 40, 41, 42, 43, 44), and a separately adjustable temperature control device (heating elements 24) associated with each zone (37, 39, 40, 41, 42, 43), the first zone (sugar intake zone 37) being associated with a filling port (25) for sugar, a plurality of, preferably three, caramelisation zones (39, 40, 41) being provided downstream in the direction of conveyance for caramelising the sugar, the next zone (fruit intake zone 42) being associated with a further filling port (26) for fruit kernels and, downstream, a plurality of, preferably two, mixing zones (43, 44) being provided for thorough mixing of the fruit kernels with the sugar.

13. Equipment according to Claim 12, characterised in that the screw (14 and/or 15) has, in the central section (30) corresponding to the caramelisation zone (38), a larger core cross-section and a smaller number of flights than in the initial section (29) corresponding to the sugar intake zone (37).

14. Equipment according to Claim 12 or 13, characterised in that the screw (14 and/or 15) has, in the end section (31) corresponding to the fruit intake zone (42) and to the mixing region (45), a smaller core cross-section than in the central section (30) and a smaller number of flights than in the initial section (29) and a greater number of flights than in the central section (30).

15. Equipment according to one of Claims 12 to 14, characterised in that the screw (14 and/or 15) has, in the initial section (29) corresponding to the sugar intake zone (37), a smaller core cross-section and a greater number of flights than in the central section (30).

16. Equipment according to one of Claims 12 to 15, characterised in that the sugar intake zone (37) and fruit intake zone (42) are associated with a metering device (34, 35) or a mixing/metering device for metered feeding of sugar (icing sugar 11) and/or fruit kernels (hazelnuts 12).

17. Equipment according to one of Claims 12 to 16, characterised in that a plurality of, in particular two, screws (14, 15) are provided in the barrel (16) of the screw extruder, which screws can be driven in the same direction or in opposite directions and have intermeshing or mutually adjoining profiles.

## Revendications

1. Procédé de préparation de croquant à base de fruits à amande à partir d'un mélange d'amandes et de sucre dans une extrudeuse à vis continue, caractérisé en ce que le sucre est introduit dans l'extrudeuse à vis dans une première zone d'entrée (zone d'entrée de sucre 37), en ce qu'il parcourt un secteur de caramélisation (38) le long d'une première partie d'une voie de transport (36) de l'extrudeuse à vis, en ce que les amandes sont introduites dans une deuxième zone d'entrée (zone d'entrée d'amandes 42) et en ce que celles-ci sont, dans une deuxième partie de la voie de transport (36), grillées au cours du mélange avec le sucre caramélisé.

2. Procédé suivant la revendication 1, caractérisé par l'utilisation de sucre en poudre (11) et/ou d'alcool de sucre comme élément du mélange (10).

3. Procédé suivant la revendication 1, caractérisé en ce que le mélange (10) déplacé le long d'une voie de transport (36) de l'extrudeuse à vis parcourt plusieurs, de préférence sept, tronçons de transport (zones 37, 39, 40, 41, 42, 43, 44) qui sont amenées à une température équilibrée différente.

4. Procédé suivant la revendication 1, caractérisé en ce que la zone d'entrée de sucre (37) présente une température de 160°C et la zone d'entrée d'amandes (42) une température de 150°C.

5. Procédé suivant la revendication 1, caractérisé en ce que les amandes (noisettes 12) sont préchauffées à l'extérieur de l'extrudeuse, de préférence à une température de 50°C, et sont introduites ainsi dans la zone d'entrée d'amandes (42).

6. Procédé suivant la revendication 3, caractérisé en ce que, entre la zone d'entrée de sucre (37) et la zone d'entrée d'amandes (42), la caramélisation du sucre (sucre en poudre 11) a lieu, en particulier avec fusion uniquement de la surface des grains de sucre, dans un secteur de caramélisation (38) formé de préférence de trois zones (zones de caramélisation 39, 40, 41).

7. Procédé suivant la revendication 6, caractérisé en ce que les zones de caramélisation (39, 40, 41) présentent des températures qui décroissent dans le sens de transport, en particulier 220°C dans la première zone de caramélisation (39), 190°C dans la deuxième zone de caramélisation (40) et 160°C dans la troisième zone de caramélisation (41).

8. Procédé suivant la revendication 3, caractérisé en ce que, à la suite de la zone d'entrée d'amandes (42), un mélange intime entre le sucre caramélisé (sucre en poudre 11) et les amandes (noisettes 12) a lieu pour la formation d'un mélange croquant susceptible de s'écouler dans au moins une, de préférence deux, zones (zones de mélange 43, 44) formant un secteur de mélange (45).

9. Procédé suivant la revendication 8, caractérisé en ce que les zones de mélange (43, 44) présentent des températures qui décroissent dans le sens de transport, en particulier 130°C dans la première zone de mélange (43) et 120°C dans la deuxième zone de mélange (44).

10. Procédé suivant l'une des revendications 1 à 9, caractérisé en ce que la vis (14 ou respectivement 15) de l'extrudeuse à vis est au moins partiellement chauffée, en particulier à une température de 140°C.

11. Procédé suivant l'une des revendications 1 à 10, caractérisé en ce que les amandes (noisettes 12) sont fragmentées avant le chargement dans l'extrudeuse à vis pour obtenir une plus grande densité d'arôme du croquant à base de fruits à amande.

12. Dispositif pour la mise en oeuvre du procédé suivant l'une des revendications 1 à 11, caractérisé en ce qu'une extrudeuse à vis constituée d'un cylindre (16) et d'au moins une vis (14 et respectivement 15) présente une voie de transport subdivisée en plusieurs zones (37, 39, 40, 41, 42, 43, 44) et un dispositif d'équilibrage de température (éléments chauffants 24) séparément ajustables, adjoints à chaque zone (37, 39, 40, 41, 42, 43, 44), une ouverture de chargement (25) pour du sucre étant adjointe à la première zone (zone d'entrée de sucre 37), plusieurs, de préférence trois, zones de caramélisation (39, 40, 41) étant ensuite agencées dans le sens de transport pour la caramélisation du sucre, une autre ouverture de chargement (26) pour des amandes étant adjointe à la zone suivante (zone d'entrée d'amandes 42) et plusieurs, de préférence deux, zones de mélange (43, 44) étant ensuite agencées pour le mélange intime des amandes avec le sucre.

13. Dispositif suivant la revendication 12, caractérisé en ce que la vis (14 ou respectivement 15) présente, dans la section centrale (30) correspondant au secteur de caramélisation, une section de noyau plus grande et un nombre de spires plus petit que dans la section de départ (29) correspondant à la zone d'entrée de sucre (37).

14. Dispositif suivant l'une des revendications 12 et 13, caractérisé en ce que la vis (14 ou respectivement 15) présente dans la section finale (31) correspondant à la zone d'entrée d'amandes (42) et au secteur de mélange (45), une section de noyau plus faible que dans la section centrale (30) et un nombre de spires plus petit que dans la section de départ (29) ainsi qu'un nombre de spires plus grand que dans la section centrale (30).

15. Dispositif suivant l'une des revendications 12 à 14, caractérisé en ce que la vis (14 ou respectivement 15) présente, dans la section de départ (29) correspondant à la zone d'introduction de sucre (37), une section de noyau plus faible et un nombre de spires plus grand que dans la section centrale (30).

16. Dispositif suivant l'une des revendications 12 à 15, caractérisé en ce qu'un dispositif de dosage (34, 35) ou un dispositif de dosage et de mélange est adjoint à la zone d'entrée de sucre (37) et à la zone d'entrée d'amandes (42) pour une alimentation dosée en sucre (sucre en poudre 11) et/ou en amandes (noisettes 12).

17. Dispositif suivant l'une des revendications 12 à 16, caractérisé en ce que plusieurs, en particulier deux, vis (14, 15) sont agencées dans le cylindre (16) de l'extrudeuse à vis et en ce qu'elles peuvent être entraînées en sens opposés et dans le même sens avec des profils qui s'engrènent l'un dans l'autre ou qui sont adjacents l'un à l'autre.
